# EUROPÄISCHE PATENTSCHRIFT

(11) **EP 1 820 196 B1**
(45) Veröffentlichungstag und Bekanntmachung des Hinweises auf die Patenterteilung: **12.09.2012**
(21) Anmeldenummer: 05801282.4
(22) Anmeldetag: 05.11.2005
(51) Int. Cl.: G21C 3/33, G21C 5/06

(54) **BRENNELEMENT FÜR EINEN SIEDEWASSERREAKTOR**
FUEL ELEMENT FOR A BOILING WATER REACTOR
ELEMENT COMBUSTIBLE POUR UN REACTEUR A EAU BOUILLANTE

(30) Priorität: 09.12.2004 DE 102004059195
(43) Veröffentlichungstag der Anmeldung: 22.08.2007
(73) Patentinhaber: AREVA NP GmbH, 91052 Erlangen (DE)
(72) Erfinder: FRIEDRICH, Erhard, 90542 Eckental (DE); LIPPERT, Hans-Joachim, 91315 Höchstadt (DE); RINK, Roland, 91052 Erlangen (DE)
(74) Vertreter: Mörtel & Höfner
(86) Internationale Anmeldenummer: PCT/EP2005/011862
(87) Internationale Veröffentlichungsnummer: WO 2006/061068

(56) Entgegenhaltungen:
- WO-A2-03/067606
- AT-B- 365 828
- DE-A1- 2 215 134
- DE-A1- 4 114 004
- DE-U1- 20 105 913
- US-A- 3 968 008

## Beschreibung

Die Erfindung betrifft ein Brennelement für einen Siedewasser-reaktor. Ein solches, beispielsweise aus DE 201 05 913 U1 US3968008 und AT 365 828 C bekanntes Brennelement umfasst einen oberseitig von einer Siebplatte abgeschlossenen Brennelementfuß, einen Brennelementkopf und ein dazwischen angeordnetes Bündel aus langen und teillangen, sich vom Brennelementfuß wegerstrecken den Brennstäben und einen innerhalb des Brennstabbündels angeordneten Wasserkanal. Die langen Brennstäbe sind zwischen Brennelementfuß und -kopf mit geringem axialen Spiel gehalten. Dieses Spiel ermöglicht, dass sich die Brennstäbe in Längsrichtung ausdehnen können, ohne dass mechanische Verspannungen auftreten. Die teillangen Brennstäbe, die sich ausgehend von dem Brennelementfuß nur bis zu einer Position unterhalb des Brennelementkopfes erstrecken, werden bei Siedewasserreaktoren im wesentlichen aus Gründen der thermohydraulischen Stabilität sowie der Neutronenmoderation eingesetzt. Um zu verhindern, dass die teillangen Brennstäbe beim Reaktorbetrieb aufschwimmen und in eine ungünstige Lageposition gelangen, werden sie am Brennelementfuß gehalten. Herkömmlicherweise geschieht dies dadurch, dass in der den Brennelementfuß oberseits abschlie-βenden, zur Zurückhaltung von Fremdkörpern im Kühlwasser dienenden Siebplatte (fuel guard) Bohrungen eingearbeitet sind, in die eine Hülse eingelötet wird. Am unteren Ende von teillangen Stäben ist ein etwa hülsenförmiges Federelement fixiert, das in die mit einer Hülse versehene Bohrung in der Siebplatte eingesetzt und dort durch Reib- oder Formschluss gehalten wird. Mit dem Herstellen der Bohrungen in die Siebplatte, dem Einlöten von Hülsen sowie der Befestigung von Federelementen am unteren Ende von teillangen Stäben ist ein relativ hoher Fertigungs- und Montageaufwand verbunden. Der Erfindung liegt die Aufgabe zu Grunde, ein Brennelement so zu gestalten, dass eine einfache Befestigung eines teillangen Brennstabes am Brennelementfuß möglich ist.

Diese Aufgabe wird gemäß Anspruch 1 dadurch gelöst, dass mehrere teillange Brennstäbe an einem separaten Halteteil axial fixiert sind, welches mit der Oberseite des Brennelementfußes verbunden ist. Das Einbringen von Bohrungen in die Siebplatte eines Brennelementfußes und das Einlöten von Hülsen kann entfallen. Es ist zwar die Herstellung eines oder mehrerer separater Halteteile erforderlich. Diese können aber relativ einfach, z.B. als Blechstanzteile gestaltet sein und sind dann mit entsprechend geringem Aufwand herstellbar. Außerdem lassen sich an einem Halteteil gleich mehrere oder sogar alle teillangen Brennstäbe fixieren. Eine Befestigung des Halteteils am Brennelementfuß bzw. an der Siebplatte kann ebenfalls auf einfache Weise, beispielsweise durch eine Verschweißung an einigen wenigen Stellen erfolgen.

Eine weitere Vereinfachung besteht darin, dass ein Halteteil so ausgestaltet ist, dass sich darauf lange Brennstäbe, mit oder ohne Axialfixierung abstützen können. Es ist also ein Halteelement gleichzeitig mehreren teillangen und langen Brennstäben zugeordnet. Beispielsweise kann sich dann ein Halteelement über eine gesamte Brennstabreihe erstrecken, ohne dass dies besondere Anforderungen an die Konstruktion des Halteelements erfordert. Insbesondere kann ein einziges Halteelement zur Fixierung bzw. aller Brennstäbe eines Brennelements dienen.

Ein Halteteil kann auch so ausgestaltet sein, dass zumindest ein Teil der langen Brennstäbe daran zumindest radial fixiert ist. Auf diese Weise erfolgt im Bereich des Brennelementfußes eine laterale Halterung der langen Brennstäbe, so dass auf den untersten, d.h. dem Brennelementfuß am nächsten liegenden Abstandhalter verzichtet werden kann. In diesem Sinne kann es auch vorteilhaft sein, wenn auch zumindest ein Teil der teillangen Brennstäbe an einem Halteteil radial fixiert sind.

Vorzugsweise erfolgt die Fixierung des Brennstabes an einem Halteteil mit Hilfe einer Schnappverbindung mit axialer Fügerichtung. Die Montage der Brennstäbe am Brennelementfuß ist dadurch vereinfacht. Ein Brennstab muss lediglich axial in ein entsprechend gestaltetes Halteelement am Halteteil eingesteckt werden ohne das weitere Maßnahmen zur Fixierung erforderlich sind. Eine bevorzugte Ausgestaltung einer solchen Verbindungsart sieht vor, dass das untere Ende eines Brennstabes eine radiale Einschnürung aufweist, die von einem am Halteelement angeordneten Rastelement axial wirksam hintergriffen ist. Das Rastelement ist dabei vorzugsweise durch zwei mit ihren Flachseiten einander zugewandten an das Halteelement angeformte Laschen gebildet, wobei diese jeweils einen vorgewölbten Bereich aufweisen, der in die genannte Einschnürung federnd eingreift. Die einander gegenüberliegenden Laschen halten einen Brennstab auch seitlich fest, so dass insoweit bereits eine gewisse laterale bzw. radiale Fixierung vorliegt. Ein seitliches Ausweichen könnte allenfalls in einer etwa längs der Laschen verlaufenden Richtung erfolgen. Dies wird aber bei einer bevorzugten Ausgestaltung dadurch verhindert, dass am unteren Ende eines Brennstabes zwei an diametral gegenüberliegenden Stellen seitlich abstehende Vorsprünge vorhanden sind, welche jeweils in eine Ausnehmung einer Lasche eingreifen.

Um den durch die Siebplatte ohnehin schon verengten Strömungsquerschnitt für das durch einen Brennelementfuß strömende Kühlwasser nicht noch weiter zu beschränken, ist ein Halteteil so auf der Siebplatte angeordnet, dass deren Sieböffnungen im wesentlichen frei bleiben. Im Falle von Siebplatten, die parallel zueinander verlaufende Stege aufweisen wird dies dadurch gewährleistet, dass die Halteteile als Leisten ausgestaltet sind, die parallel zueinander und im Rastermaß der Siebplatten-Stege angeordnet sind. Es ist dabei denkbar, dass separate, d.h. nicht miteinander in Verbindung stehende Leisten verwendet werden. In einem solchen Fall werden die einzelnen Leisten an der Gitterplatte fixiert, insbesondere angeschweißt. Eine andere vorteilhafte Ausgestaltung sieht vor, dass die Leisten Bestandteile einer einstückigen Gitterplatte sind, wobei sie mit ihren Enden an quer zu ihnen ausgerichteten Verbindungsstegen angeformt sind. Eine derartige Gitterplatte lässt sich mit einem geringen Montageaufwand am Brennelementfuß fixieren. Eine besonders einfache Fixierung wird dadurch gewährleistet, dass die Gitterplatte eine von dem Wasserkanal durchsetzte Öffnung aufweist, deren Öffnungsrand axial wirksam von Wasserkanal hintergriffen ist. Eine Drehfixierung des Halteteils, die insbesondere dann erforderlich ist, wenn auf den untersten Abstandhalter verzichtet werden soll, kann etwa dadurch erfolgen, dass die Gitterplatte am Brennelementfuß angeschweißt ist. Vorzugsweise ist die Gitterplatte jedoch am Wasserkanal drehfixiert, was durch einen in Drehrichtung wirksamen Formschluss zwischen dem Wasserkanal und der Öffnung bzw. deren Öffnungsrand bewerkstelligt wird.

Ausführungsbeispiele der Erfindung werden im folgenden anhand der beigefügten Zeichnungen näher erläutert. Es zeigen:
- Fig. 1: eine Gesamtansicht eines Brennelements für einen Siedewasserreaktor,
- Fig. 2: eine aus mehreren Halteteilen gebildete Gitterplatte mit zur Fixierung ausschließlich von teillangen Brennstäben dienenden Rastelementen,
- Fig. 3: den oberen Bereich eines Brennelementfußes mit Siebplatte und einer darauf positionierten Gitterplatte,
- Fig. 4: den Brennelementfuß von Fig. 3 mit darauf angeordneten langen und teillangen Brennstäben,
- Fig. 5: einen vergrößerten Ausschnitt aus Fig. 4 in einer Seitenansicht,
- Fig. 6: eine Seitenansicht des genannten Ausschnitts aus einer um 90° gegenüber Fig. 5 gedrehten Blickrichtung,
- Fig. 7: den oberen Bereich eines Brennelementfußes, mit mehreren, leistenförmigen Halteteilen zur axialen und radialen Fixierung sämtlicher Brennstäbe,

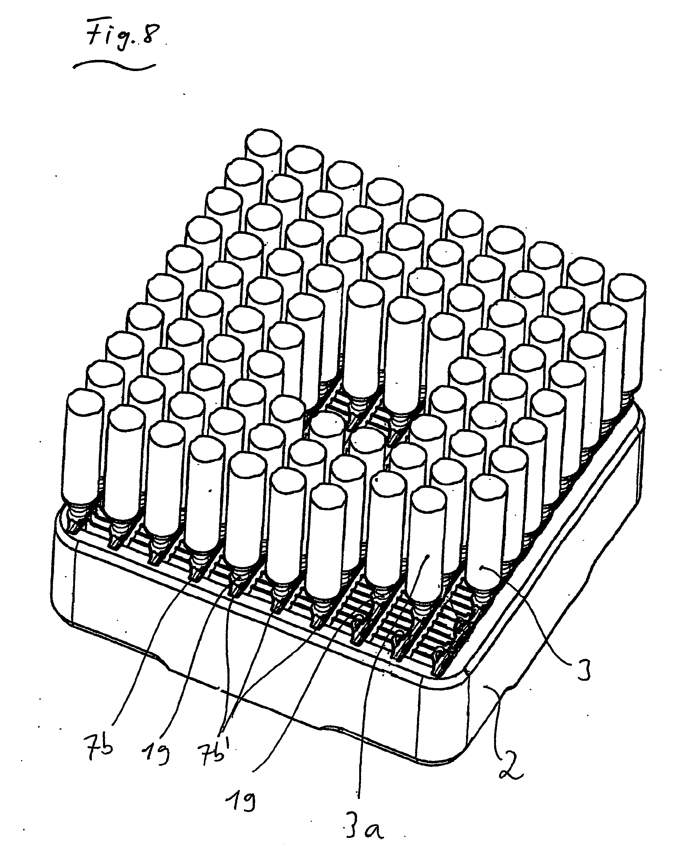

- Fig. 8: den Brennelementfuß von Fig. 7, jedoch mit darauf positionierten langen und teillangen Brennstäben,

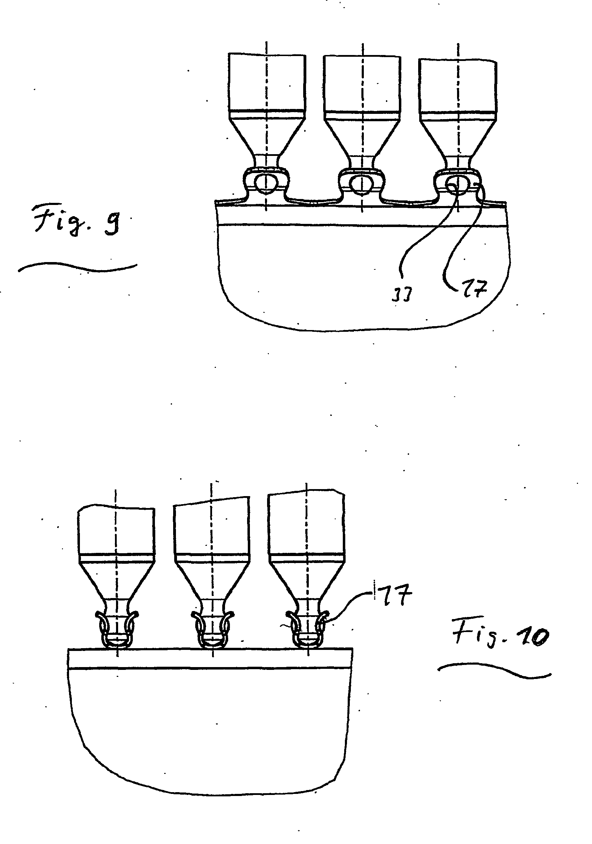

- Fig. 9: einen Ausschnitt aus Fig. 8 in einer Seitenansicht,
- Fig. 10: eine Seitenansicht des genannten Austritts aus einer gegenüber Fig. 10 um 90° gedrehten Blickrichtung,
- Fig. 11: einen Montagerahmen mit daran fixierten leistenförmigen Halteteilen,

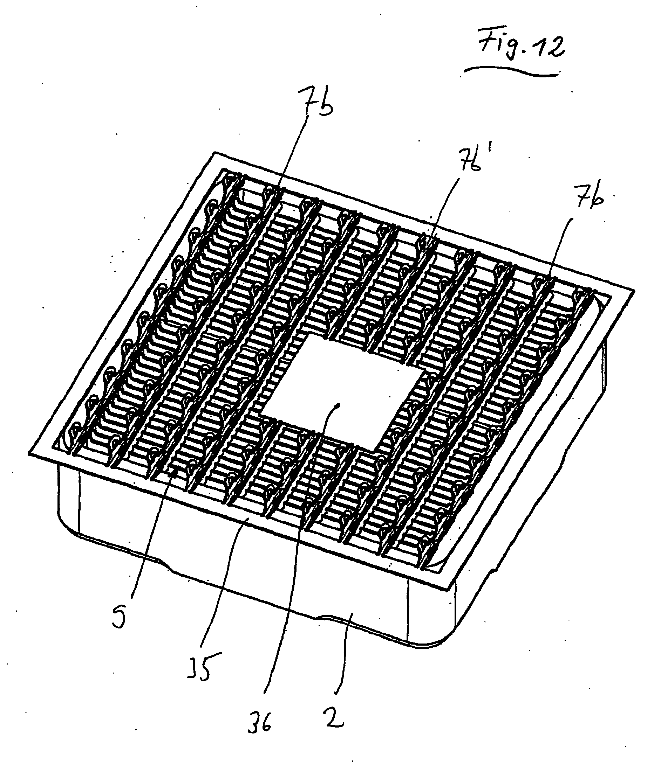

- Fig. 12: den oberen Bereich eines Brennelementfußes mit aufgelegter Gitterplatte mit Montagerahmen.

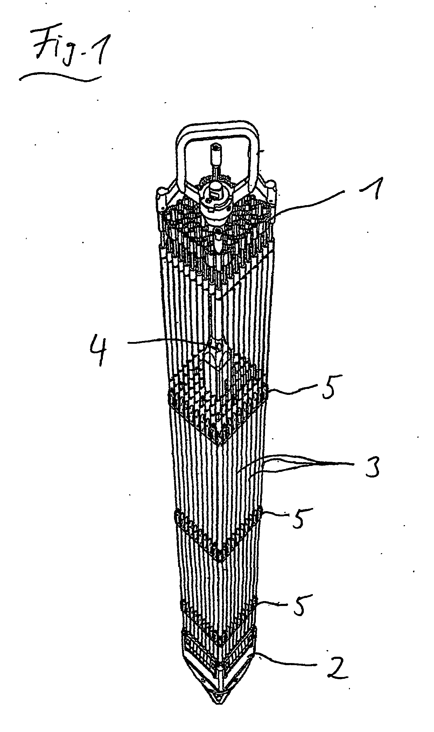

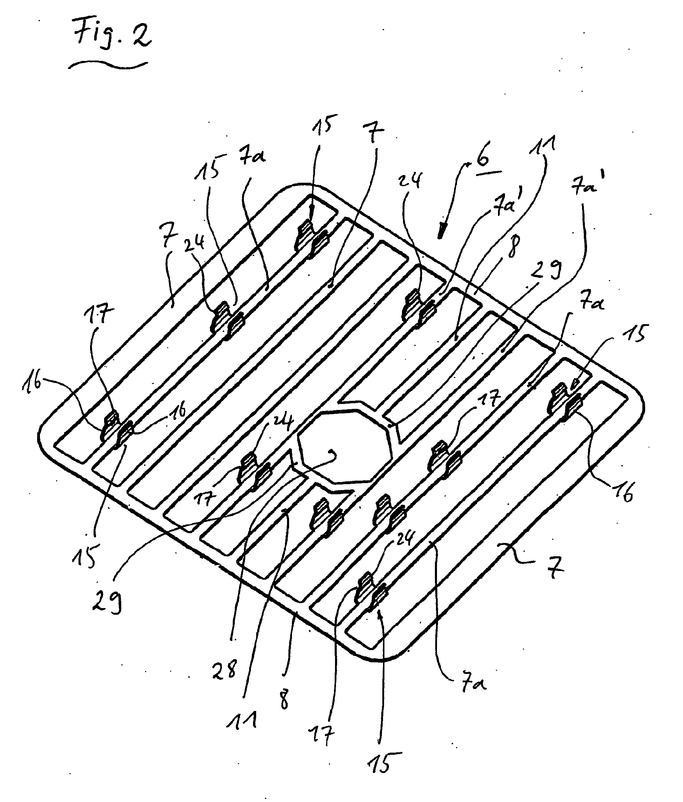

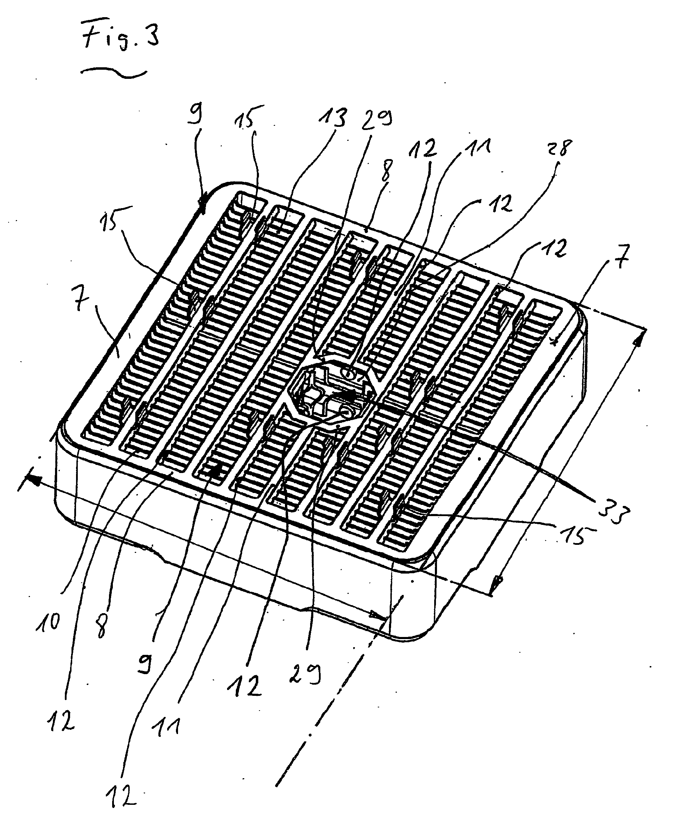

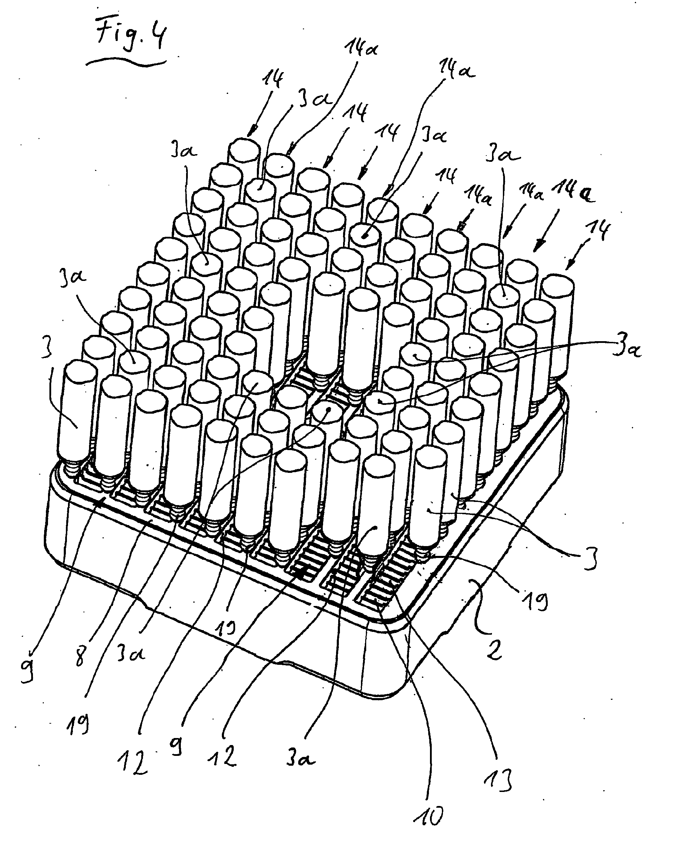

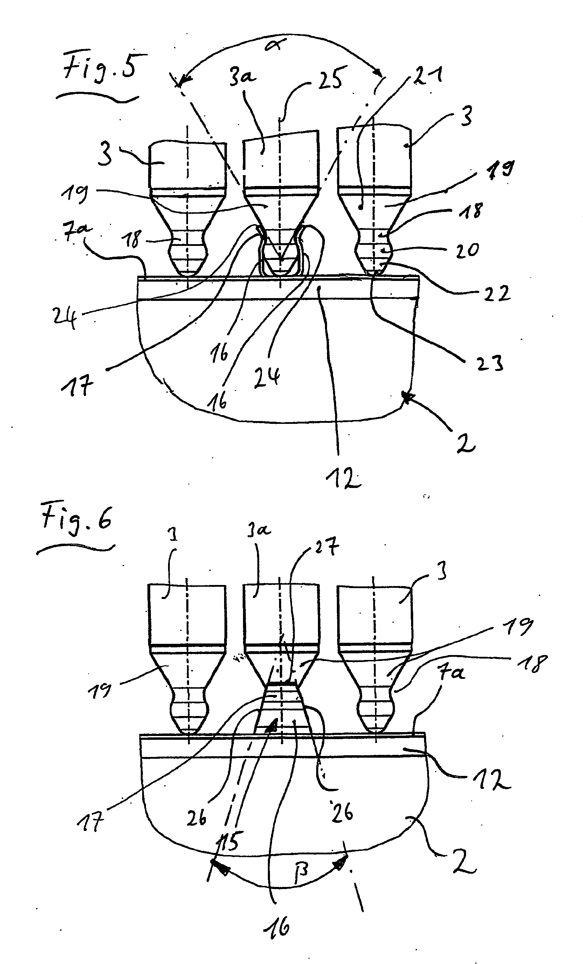

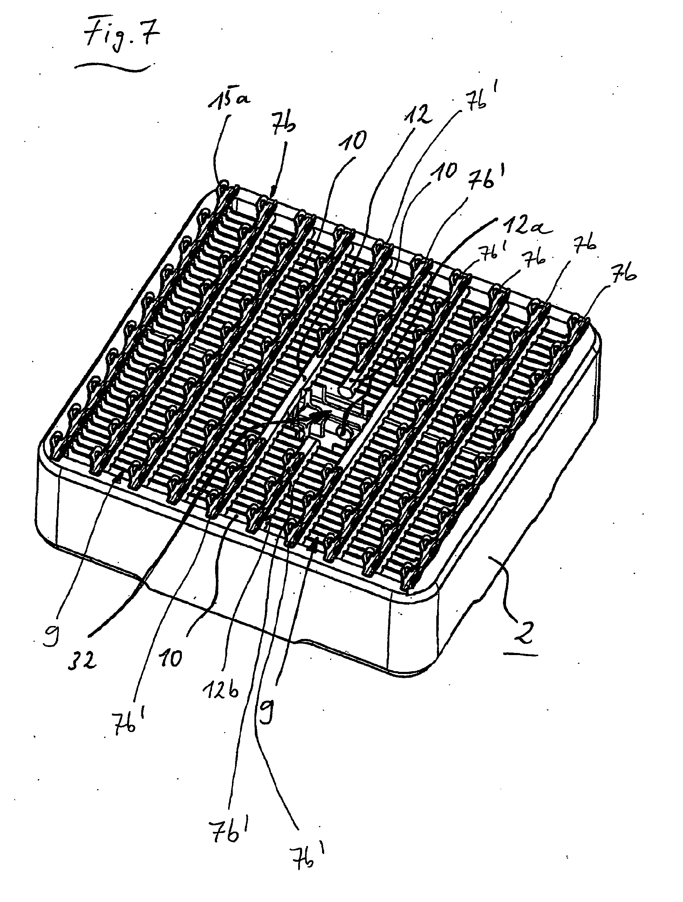

Fig. 1 zeigt ein Brennelement eines Siedewasserreaktors, das als wesentliche Bestandteile einen Brennelementkopf 1, einen Brennelementfuß 2, ein dazwischen angeordnetes Bündel von Brennstäben 3, eine innerhalb des Brennstabbündels angeordneten Wasserkanal 4 und mehrere in Axialrichtung beabstandete, die Brennstäbe 3 lateral haltende Abstandhalter 5 umfasst. In Fig. 2 bis 6 ist eine Ausführungsvariante zur Fixierung von teillangen Brennstäben 3a'am Brennelementfuß 2 dargestellt. Hierzu dient die in Fig. 2 gezeigte Gitterplatte 6. Diese setzt sich aus mehreren parallel zueinander verlaufenden, Halteteile bildende Leisten 7 und rechtwinklig dazu ausgerichteten Verbindungsstegen 8 zusammen, wobei die Enden der Leisten 7 an die Verbindungsstege angeformt sind. Die Leisten 7 sind in Längsrichtung der Verbindungsstege 8 gleichmäßig beabstandet. Die Gitterplatte 6 liegt im Montagezustand auf der Oberseite einer den Brennelementfuß abschließenden Siebplatte 9 auf. Diese umfasst eine Vielzahl von parallel zueinander verlaufenden Zuschnitten 10 aus Stahl- Blech oder einem sonstigen geeigneten Material. Die Zuschnitte 10 sind mit quer zu ihrer Längserstreckung verlaufenden, an ihrer Ober und Unterseite angeordneten Stegen 12 miteinander verbunden, (siehe insbesondere Fig. 3 und 7). Die Leisten 7 der Gitterplatte 6 sind im Rastermaß der Stege 12 der Siebplatte 9 angeordnet. Im Montagezustand ragen die Leisten 7 somit nicht in die in der Siebplatte 9 vorhandenen Sieböffnungen 13 hinein, sondern erstrecken sich oberhalb der Stege 12. Die Leisten 7 sowie die Verbindungsstege 8 sind in einer Ebene angeordnet, so dass die Gitterplatte 6 im Montagezustand plan auf der Siebplatte 9 aufliegt. Sowohl die langen Brennstäbe 3 als auch die teillangen Brennstäbe 3a stützen sich somit nicht auf den Stegen 12 sondern auf den Leisten 7 ab. Jede Leiste 7 erstreckt sich also in Richtung einer Brennstabreihe 14. Eine Leiste 7a, welche einer teillange Brennstäbe 3a enthaltenden Brennstabreihe 14a zugeordnet ist, bildet ein Halteteil und weist eine den Brennstäben 3a entsprechende Anzahl an Rastelement 15 auf. Ein Rastelement 15 ist aus zwei an gegenüberliegenden Stellen seitlich an einer Leiste 7a angeformten Laschen 16 gebildet. Eine Gitterplatte 6 wird durch Ausstanzen aus einem beispielsweise 1 mm starken Stahlblech hergestellt. Nach dem Ausstanzen erstrecken sich die Laschen 16 in der Planebene der Gitterplatte 6. Aus dieser Lage werden sie in ihre in Fig. 2 gezeigte Position umgebogen, in der sie sich etwa in Längs- bzw. Axialrichtung eines Brennstabs 3a erstrecken. Zuvor erfolgt jedoch eine Prägung, mit der in einem mittleren Längsabschnitt einer Lasche 16 eine sich in Längsrichtung einer Leiste 7a erstreckende Sicke 17 erzeugt wird. Wie insbesondere Fig. 5 zu entnehmen ist, greifen die Sicken 17 in eine ringförmige Einschnürung 18 am unteren, von einem Stopfen 19 gebildeten Ende eines Brennstabes 3 ein. Oberhalb der Einschnürung 18 schließt sich dann ein Konusbereich 21 an. Unterhalb der Einschnürung 18 weist der Stopfen 19 einen ringwulstartig radial erweiterten Bereich 20 auf. Daran schließt sich nach unten ein Konusbereich 22 mit abgerundeter Spitze 23 an. Die sich oberseits an die Sicke 18 anschließenden Endabschnitte 24 der Laschen 16 verlaufen schräg zur Mittellängsachse 25 eines Brennstabes 3a und schließen einen sich nach oben öffnenden spitzen Winkel (Fig. 5) ein. Die Schrägstellung bzw. der Winkel a entspricht dabei etwa dem Konuswinkel des Konusbereichs 21. Die Seitenränder 26 einer Lasche 16 verlaufen schräg und schließen einen sich nach unten öffnenden Winkel β (Fig. 6) ein. Der obere Rand 27 einer Lasche 16 verläuft etwa parallel zur Längsrichtung einer Leiste 7a. Wie Fig. 5 und 6 zu entnehmen ist, sind die unteren Enden der langen Brennstäbe ebenso gestaltet, wie jene der teillangen Brennstäbe 3a. Das Ende der langen Brennstäbe 3 kann aber auch anders gestaltet sein.

Bei der Montage eines Brennstabes 3a wird dieser mit seinem Stopfen 19 in ein Rastelement 15 eingesteckt. Die schräg zueinander verlaufenden Endabschnitte 24 bilden dabei einen Einführtrichter. Der Konusbereich 22 und der sich daran anschließende Bereich 20 drücken die Laschen 16 auseinander. Wenn der Stopfen 19 vollständig in das Halteelement 15 eingesteckt ist, rasten die Sicken 17 in die Einschnürung 18 ein und fixieren den Brennstab 13a in Axialrichtung.

Wie Fig. 2 zu entnehmen ist, ist an einer dezentralen Stelle der Gitterplatte 6 eine Öffnung 28 vorhanden, deren Öffnungsrand von Stegen 29 gebildet ist. Die Stege 29 sind so geformt und mit zwei Leisten 7a verbunden, dass eine achteckige Öffnung 28 gebildet ist. Zwischen den Leisten 7a' erstrecken sich zwei kurze, sich in das Rastermaß der übrigen Leisten einfügende Leistenabschnitte 11, deren einander zugewandte Enden jeweils an einem Steg 29 angeformt sind. Die Öffnung 28 ist im Montagezustand von einem Längsabschnitt (nicht dargestellt) des Wasserkanals 4 durchgriffen, der eine komplementär zur Öffnungsform ausgebildete Umrissform aufweist. Die Gitterplatte'6 ist auf diese Weise drehfest am Wasserkanal 4 fixiert. Eine Fixierung der Gitterplatte 6 in Axialrichtung erfolgt dadurch, dass der die Öffnung 28 sich durchsetzenden Längsabschnitt (nicht dargestellt) des Wasserkanal 4 die Gitterplatte axial wirksam hinterschneidet. Dies wird durch eine Radialschulter (nicht dargestellt) am Wasserkanal erreicht, welche die Stege 29 und die damit in Verbindung stehenden Abschnitte der Leisten 7a' radial überragt.

In Fig. 7 ist eine Ausführungsvariante dargestellt, die ebenfalls mehrere als Leisten 7b ausgebildete Halteteile umfasst. Die Leisten 7b sind auf den Stegen 12 der Siebplatte 9 angeordnet und im Bereich ihrer Enden an die Siebplatte 9 bzw. an den Brennelementfuß 2 angeschweißt. Im Bereich einer zur Fixierung des Wasserkanals 4 dienenden Ausnehmung 32 sind einem dort vorhandenen, aus zwei Teilstücken 12a, 12b bestehenden Steg 12 bzw. einer Brennstabreihe 14 zwei kurze Leisten 7b' zugeordnet, zwischen deren einander zugewandten Enden ein Abstand vorhanden ist, der mindestens so groß ist wie die lichte Weite der Ausnehmung 32. Unterschiedlich zu dem weiter oben beschriebenen Ausführungsbeispiel ist, dass jede Leiste 7b so viel Rastelemente 15a trägt, wie Brennstäbe 3, 3a in einer Brennstabreihe 14 vorhanden sind. Die Rastelemente 15a sind so gestaltet, dass sie einen Brennstab 3, 3a auch in einer sich in Längsrichtung einer Leiste 7b erstreckenden Richtung fixieren. Sie weisen dazu im Bereich ihrer Sicke 17 eine etwa kreisrunde Ausnehmung 33 auf. In die Ausnehmungen 33 der Laschen 16 eines Rastelementes 15a greift der ringwulstartig erweiterte Bereich 20, dessen Oberfläche z.B. auch als Teil einer Kugeloberfläche ausgebildet sein kann, ein. Denkbar ist auch, dass die Laschen 16 eine den Bereich 20 in sich aufnehmende Ausbuchtung (nicht dargestellt) aufweisen. Sämtliche Brennstäbe 3, 3a sind so mit in beliebigen Radialrichtungen am Brennelementfuß 2 fixiert. Die Brennstäbe 3, 3a' im unteren Bereich des Brennstabbündels sind dadurch derart lateral fixiert, dass der unterste Abstandhalter 5a (Fig. 1) entfallen kann. Denkbar ist auch, dass eine Gitterplatte 6 gemäß Fig. 2 mit einer Anzahl der Brennstäbe 3, 3a eines Brennelements entsprechenden Zahl von Rastelementen 15 und/oder 15a ausgerüstet ist.

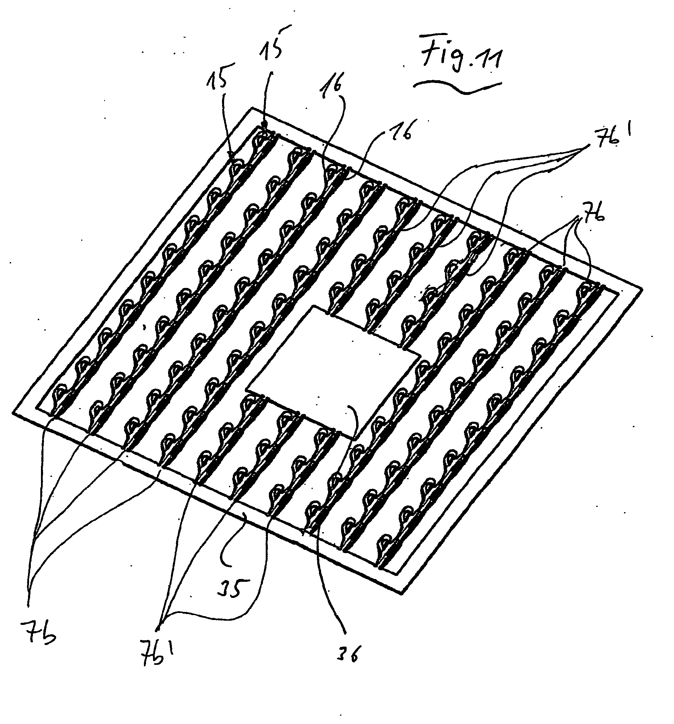

Um die Montage der Leisten 7b an einer Siebplatte 9 zu erleichtern, sind sie an einen Rahmen 35 angeformt, welcher eine der Umrissfläche der Siebplatte 9 entsprechende Außenkontur aufweist. Die kurzen Leisten 7b' sind mit ihrem inneren Ende an einer Platte 36 angeformt. Ein aus Leisten 7b, 7b' und Rahmen 35 bestehendes Gebilde kann, wie die Ausführungsvariante von Fig. 2, aus einem beispielsweise 1 mm starken Zuschnitt aus Stahlblech ausgestanzt werden, wobei auch hier die Laschen 16 aus der Planebene des ursprünglichen Blechzuschnittes in ihre in Fig. 11 gezeigt Position umgebogen werden. Die auf diese Weise entstandene Hilfskonstruktion wird auf eine Siebplatte 9 aufgelegt und dann die einzelnen Leisten 7b, 7b' an geeigneten Stellen, etwa an ihren Enden, mit der Siebplatte 9 oder mit dem Brennelementfuß 2 verschweißt. Anschließend werden die Platte 36 und der Rahmen 35 abgetrennt.

### Bezugszeichenliste

- 1: Brennelementkopf
- 2: Brennelementfuß
- 3: Brennstab
- 4: Wasserkanal
- 5: Abstandhalter
- 6: Gitterplatte
- 7: Leiste
- 8: Verbindungssteg
- 9: Siebplatte
- 10: Zuschnitt
- 11: Leistenabschnitt
- 12: Steg
- 13: Sieböffnung
- 14: Brennstabreihe
- 15: Rastelement
- 16: Lasche
- 17: Sicke
- 18: Einschnürung
- 19: Stopfen
- 20: Bereich
- 21: Konusbereich
- 22: Konusbereich
- 23: Spitze
- 24: Endabschnitt
- 25: Mittellängsachse
- 26: Seitenrand
- 27: oberer Rand
- 28: Öffnung
- 29: Steg
- 32: Ausnehmung
- 33: Ausnehmung
- 35: Rahmen
- 36: Platte

## Patentansprüche

1. Brennelement eines Siedewasserreaktor, umfassend einen oberseitig von einer Siebplatte (9) abgeschlossenen Brennelementfuß (2), einen Brennelementkopf (1) und ein dazwischen angeordnetes Bündel aus langen und teillangen, sich vom Brennelementfuß weg erstreckenden Brennstäben (3,3a) und einen innerhalb des Brennstabbündels angeordneten Wasserkanal (4), **dadurch gekennzeichnet, dass** mehrere teillange Brennstäbe (3a) an einem separaten Halteteil axial fixiert sind, welches an der Siebplatte (9) befestigt ist und sich die teillangen Brennstäben (3a) auf dem Halteteil abstützen.

2. Brennelement nach Anspruch 1, **dadurch gekennzeichnet, dass** sich auch lange Brennstäbe (3) auf dem Halteteil abstützen.

3. Brennelement nach Anspruch 1 oder 2, **dadurch gekennzeichnet, dass** zumindest ein Teil der langen Brennstäbe (3) an dem Halteteil zumindest radial fixiert ist.

4. Brennelement nach Anspruch 3, **dadurch gekennzeichnet, dass** zumindest ein Teil der teillangen Brennstäbe an dem Halteteil radial fixiert ist.

5. Brennelement nach einem der vorhergehenden Ansprüche, **dadurch gekennzeichnet, dass** ein Brennstab (3, 3a) mit Hilfe einer Schnappverbindung mit axialer Fügerichtung an dem Halteteil fixiert ist.

6. Brennelement nach Anspruch 5, **dadurch gekennzeichnet, dass** das untere Ende eines Brennstabs (3, 3a) eine radiale Einschnürung (18) aufweist, die von einem am Halteteil angeordneten Rastelement (15, 15a) axial wirksam hintergriffen ist.

7. Brennelement nach Anspruch 6, **dadurch gekennzeichnet, dass** ein Rastelement (15, 15a) aus zwei sich mit ihren Flachseiten einander zugewandten an das Halteteil angeformte Laschen (16) gebildet ist, die jeweils mit einem vorgewölbten Bereich in die Einschnürung (18) federnd eingreifen.

8. Brennelement nach Anspruch 7, **dadurch gekennzeichnet, dass** am unteren Ende eines Brennstabs (3, 3a) zwei an diametral gegenüberliegenden Stellen seitlich abstehende Vorsprünge vorhanden sind, welche jeweils in eine Ausnehmung (33) einer Lasche (16) eingreifen.

9. Brennelement nach einem der vorhergehenden Ansprüche, **dadurch gekennzeichnet, dass** das Halteteil so auf der Siebplatte (9) angeordnet ist dass deren Sieböffnungen (13) im Wesentlichen frei bleiben.

10. Brennelement nach Anspruch 9, **dadurch gekennzeichnet, dass** die Siebplatte (9) parallel zueinander verlaufende Stege (12) und Leisten (7a, 7b) aufweist, wobei die Leisten (7, 7a) parallel zueinander und im Rastermaß der Siebplatten-Stege (12) angeordnet sind.

11. Brennelement nach Anspruch 10, **dadurch gekennzeichnet, dass** die Leisten (7a, 7b) Bestandteile einer Gitterplatte (6) sind, wobei sie mit ihren Enden an quer zu ihnen ausgerichteten Verbindungsstegen (8) angeformt sind.

12. Brennelement nach Anspruch 11, **dadurch gekennzeichnet, dass** die Gitterplatte (6) eine von dem Wasserkanal (4) durchsetzte Öffnung (28) aufweist, deren Öffnungsrand axial wirksam vom Wasserkanal (4) hintergriffen ist.

13. Brennelement nach Anspruch 12, **dadurch gekennzeichnet, dass** die Gitterplatte (6) am Wasserkanal (4) drehfixiert ist.

14. Brennelement nach Anspruch 13, **dadurch gekennzeichnet, dass** der Wasserkanal (4) die Öffnung (28) mit einem in Drehrichtung wirksamen Formschluss durchsetzt.

## Claims

1. Fuel element of a boiling water reactor, said fuel element comprising a fuel element base (2) terminated on the upper side by a filter plate (9), a fuel element head (1), and, arranged between said fuel element base and said fuel element head, a bundle of long and medium-length fuel rods (3, 3a) extending away from the fuel element base, and a water channel (4) arranged inside the fuel rod bundle, **characterised in that** a plurality of medium-length fuel rods (3a) is fixed axially to a separate holding part, which is fastened to the filter plate (9), and the medium-length fuel rods (3a) are supported on the holding part.

2. Fuel element according to claim 1, **characterised in that** long fuel rods (3) are also supported on the holding part.

3. Fuel element according to claim 1 or 2, **characterised in that** at least some of the long fuel rods (3) are fixed at least radially to the holding part.

4. Fuel element according to claim 3, **characterised in that** at least some of the medium-length fuel rods are fixed radially to the holding part.

5. Fuel element according to one of the preceding claims, **characterised in that** a fuel rod (3, 3a) is fixed to the holding part with the aid of a snap connection with an axial direction of assembly.

6. Fuel element according to claim 5, **characterised in that** the lower end of a fuel rod (3, 3a) has a radial constriction (18), which is engaged from behind in an axially effective manner by a latching element (15,15a) arranged on the holding part.

7. Fuel element according to claim 6, **characterised in that** a latching element (15, 15a) is formed from two tabs (16), which face one another via their flat sides, are formed integrally on the holding part, and each engage resiliently in the constriction (18) by means of a pre-curved region.

8. Fuel element according to claim 7, **characterised in that** two protrusions protruding laterally at diametrically opposed points are provided at the lower end of a fuel rod (3, 3a) and each engage in a recess (33) in a tab (16).

9. Fuel element according to one of the preceding claims, **characterised in that** the holding part is arranged on the filter plate (9) in such a way that the filter openings (13) therein remain substantially free.

10. Fuel element according to claim 9, **characterised in that** the filter plate (9) has crosspieces (12) extending parallel to one another and strips (7a, 7b), the strips (7, 7a) being arranged parallel to one another and in the grid dimension of the filter plate crosspieces (12).

11. Fuel element according to claim 10, **characterised in that** the strips (7a, 7b) are components of a grid plate (6) and are formed integrally via their ends on connecting crosspiece (8) oriented transverse to said strips.

12. Fuel element according to claim 11, **characterised in that** the grid plate (6) has an opening (28) through which the water channel (4) passes, the edge of said opening being engaged from behind in an axially effective manner by the water channel (4).

13. Fuel element according to claim 12, **characterised in that** the grid plate (6) is fixed to the water channel (4) in a rotationally engaged manner.

14. Fuel element according to claim 13, **characterised in that** the water channel (4) passes through the opening (28) with a form fit effective in a direction of rotation.

## Revendications

1. Elément combustible d'un réacteur à eau bouillante comprenant une base d'élément combustible (2) terminée côté supérieur par une plaque-tamis (9), une tête d'élément combustible (1) et un ensemble intercalé constitué de crayons combustibles (3, 3a) longs et semi-longs, s'étendant à partir de la base de l'élément combustible et un conduit d'eau (4) disposé à l'intérieur de l'ensemble de crayons combustibles, **caractérisé en ce que** plusieurs crayons combustibles (3a) semi-longs sont fixées axialement sur une partie de retenue séparée, laquelle est fixée sur la plaque-tamis (9), et les crayons combustibles (3a) semi-longs s'appuient sur la partie de retenue.

2. Elément combustible selon la revendication 1, **caractérisé en ce qu'**également des crayons combustibles (3) longs s'appuient sur la partie de retenue.

3. Elément combustible selon la revendication 1 ou 2, **caractérisé en ce qu'**au moins une partie des crayons combustible longs (3) est fixée au moins radialement sur la partie de retenue.

4. Elément combustible selon la revendication 3, **caractérisé en ce qu'**au moins une partie des crayons combustibles semi-longs est fixée radialement sur la partie de retenue.

5. Elément combustible selon l'une des revendications précédentes, **caractérisé en ce qu'**un crayon combustible (3, 3a) est fixé à l'aide d'une liaison par encliquetage avec un sens d'emboîtement axial sur la partie de retenue.

6. Elément combustible selon la revendication 5, **caractérisé en ce que** l'extrémité inférieure d'un crayon combustible (3, 3a) présente un rétrécissement (18) radial, qui est saisi par l'arrière axialement de façon efficace par un élément d'arrêt (15, 15a) disposé sur la partie de retenue.

7. Elément combustible selon la revendication 6, **caractérisé en ce qu'**un élément d'arrêt (15, 15a) est formé par deux pattes (16) tournées l'une vers l'autre avec leurs côtés plats et formées sur la partie de retenue, lesquelles pattes s'engagent à chaque fois avec une zone prédéfinie en faisant ressort dans le rétrécissement (18).

8. Elément combustible selon la revendication 7, **caractérisé en ce que** deux parties saillantes, dépassant latéralement sur des emplacements opposés, sont présentes sur l'extrémité inférieure d'un crayon combustible (3, 3a) et s'engagent à chaque fois dans un évidement (33) d'une patte (16).

9. Elément combustible selon l'une des revendications précédentes, **caractérisé en ce que** la partie de retenue est disposée sur la plaque-tamis (9) de telle sorte que ses ouvertures de tamis (13) restent sensiblement libres.

10. Elément combustible selon la revendication 9, **caractérisé en ce que** la plaque-tamis (9) présente des traverses (12) et des baguettes (7a, 7b) agencées parallèlement entre elles, les baguettes (7a, 7b) étant disposées parallèlement entre elles et dans la dimension modulaire des traverses de plaque-tamis (12).

11. Elément combustible selon la revendication 10, **caractérisé en ce que** les baguettes (7a, 7b) sont des composants d'une plaque de grille (6), sachant qu'elles sont formées avec leurs extrémités sur des traverses de liaison (8) orientées transversalement par rapport à elles.

12. Elément combustible selon la revendication 11, **caractérisé en ce que** la plaque de grille (6) présente une ouverture (28) traversée par le conduit d'eau (4), ouverture dont le bord est saisi à l'arrière axialement de façon efficace par le conduit d'eau (4),

13. Elément combustible selon la revendication 12, **caractérisé en ce que** la plaque de grille (6) est fixée en rotation sur le conduit d'eau (4).

14. Elément combustible selon la revendication 13, **caractérisé en ce que** le conduit d'eau (4) traverse l'ouverture (28) avec une conjugaison de forme efficace dans le sens d'orientation.
